# EUROPEAN PATENT SPECIFICATION

(11) **EP 1 785 084 B1**
(45) Date of publication and mention of the grant of the patent: **25.04.2012**
(21) Application number: 06123886.1
(22) Date of filing: 10.11.2006
(51) Int. Cl.: B01J 49/00, A47L 15/42

(54) **System for reducing the hardness of water in a washing machine, in particular a dishwasher, and method thereof**
Vorrichtung und Verfahren zur Reduzierung der Wasserhärte in einer Waschmaschine, insbesondere in einer Geschirrspülmaschine
Dispositif et procédé pour réduire la dureté de l'eau dans une machine à laver, en particulier dans une machine à laver la vaisselle.

(30) Priority: 15.11.2005 IT TO20050805
(43) Date of publication of application: 16.05.2007
(73) Proprietor: T & P - S.p.A., 21049 Tradate (Varese) (IT)
(72) Inventor: Ghinato, Renzo, 21050, Bisuschio (VA) (IT)
(74) Representative: Dini, Roberto

(56) References cited:
- EP-A- 0 517 205
- WO-A-01/18298
- WO-A-2005/060817
- DE-A1- 4 446 731
- DE-A1- 10 204 003
- DE-A1- 10 359 161
- DE-A1-102004 021 200
- US-A1- 2002 195 403
- US-A1- 2005 236 019

## Description

The present invention relates to a system for reducing the hardness of water adapted to be used in a household washing machine, in particular a dishwasher, as well as to a method for controlling the hardness of water.

As known, household washing machines utilizing water, in particular dishwashers, are fitted with a decalcification system for wash/rinse water used for reducing the degree hardness of water, thus avoiding possible limescale deposits in the washing machine.

Such a system is also known as decalcifier or softener.

As known, limescale deposits are due to the presence of a large quantity of calcium ions (Ca++) and magnesium ions (Mg++) in the water and to the heat generated in the machine during the wash.

The decalcifier exchanges the calcium ions (Ca++) and the magnesium ions (Mg++) in the water supplied to the wash tub of the washing machine with sodium ions (Na+) contained in provided resins being present in the decalcifier.

The resins, or a similar substance, become exhausted after a certain time of usage, i.e. they run out of sodium ions (Na+) to be exchanged with calcium ions (Ca++) and magnesium ions (Mg++) in the water; as a result, when the resins have become exhausted, the water flowing therethrough substantially maintains the same hardness as it had at its inlet.

The higher the degree of hardness of water, the faster the resins become exhausted.

In order to avoid this drawback, a resin regeneration phase is provided, wherein a solution of water and salt (NaCl) is introduced into the resin container.

To obtain said solution of water and salt (NaCl), a predetermined quantity of water is supplied to a tank containing salt (NaCl), so that it can be saturated with sodium ions (Na+) which will be released in the resin container in order to regenerate the resins.

Naturally, the quantity of salt contained in the respective tank decreases progressively at every resin regeneration phase until, after a certain number of resin regeneration phases, the user must pour salt into said tank in order to restore its initial content.

In the systems for reducing the hardness of water used in the washing machines known in the art, the lack of salt in the tank is detected by checking the position of a float, which is usually housed in a recess being in hydraulic communication with the salt tank; the float is immersed in a brine having substantially the same concentration as the brine in the tank.

When the quantity of salt in the tank falls below a preset level, an optical or magnetic sensor detects the position of the float and signals the lack of salt in the salt tank to a logic unit of the washing machine, and consequently to the user.

However, using a float involves some problems, as it is quite costly and subject to possible failures. Moreover, the float may be subject to malfunctioning, in particular due to wear, or may get stuck inside the recess where it is located; in such situations, the user will not be warned promptly when salt is lacking in the respective tank.

Other problems possibly suffered by the systems for reducing the hardness of water as used in known washing machines may derive from the fact that the hardness of the water from the mains may change considerably, in particular it changes depending on the place of installation of the washing machine. Furthermore, the hardness of the water supplied to the wash tub, which has already flowed through the softening resins, changes according to the exhaustion degree of the latter, i.e. the reduction of the hardness of water decreases as the resins become exhausted.

When the degree of the hardness of the water from the mains is already low, it is reduced even further as the water flows through the softener resins, thus reaching levels which may cause washing problems. In fact, an extremely low degree of the hardness may cause the water to be too acid and possibly damage glasses during the wash; also, if too much wash detergent is poured in, the insufficient surface tension of the water may cause an excessive formation of bubbles, i.e. too much foam.

An excessive formation of foam causes to many problems, such as difficulty in activating the water circulation pump, cavitation of the same pump, increased noise of the washing machine, damage to the electric motor of the pump, crockery wash ineffectiveness due to the fact that the hydraulic circuit downstream from the pump does not receive sufficient flow to spray the water onto the crockery at the proper speed.

Besides, if the degree of hardness of the water from the mains is already low, the decalcifier turns out to be overused, since it is used for reducing the hardness of water to a value being lower than that required for the optimal operation of the washing machine; this clearly implies a higher salt consumption than necessary.

Washing machines are known wherein the hardness of water is kept substantially constant within certain limits, so as to reduce salt consumption.

A first method used in known washing machines for keeping the hardness of water substantially constant within certain limits consists in mixing the water delivered by the decalcifier and supplied to the tub of the washing machine with water coming directly from the mains, i.e. having a higher degree of hardness.

Said mixing may be provided by opening a by-pass controlled by a control solenoid valve or through a by-pass adjusted by means of a manual selector to be set during the installation stage.

In the former case, although the mixing degree can be controlled accurately, the machine suffers from the drawback of requiring additional components, such as a control solenoid valve, which increase its cost and may cause a reduction in reliability.

The latter case, on the other hand, requires a manual adjustment of the selector and provides a rough mixing control.

Another method used in known washing machines for keeping the hardness of water substantially constant within certain limits consists in performing a partial regeneration of the ionic exchange resins.

Said partial regeneration is typically carried out by controlling the quantity of salt taken from the salt tank, in particular by using a manual selector which sets different paths for the regeneration water in the salt tank.

The manual selector is set by the machine installer according to the degree of hardness of the water from the mains; it is clear that the use of a manual selector only allows for a limited number of configurations and paths for the regeneration water, thus hardly allowing to obtain the desired degree of hardness of the water in the tub.

The partial regeneration of the ionic exchange resins may also be carried out by controlling the quantity of water used during the regeneration phase, in particular by controlling the opening time of the regeneration valve.

However, the partial regeneration so obtained cannot ensure a sufficiently accurate calculation of the supplied water because, the activation time of the regeneration valve being equal, there may be considerable differences in terms of quantity of supplied water among different machines and among different regeneration cycles in the same washing machine.

Document W02005060817 relates to a dishwasher provided with a raw water supply, at least one washing container and a raw water conditioning device for softening and/or partially demineralizing raw water from the water supply network. Said raw water conditioning device comprises at least one ion exchange container containing an ion exchange material, and a refillable regenerating means container. The raw water is supplied to the washing container via the ion exchange container. A water dispenser guides the raw water from the raw water supply alternatively to the ion exchange container or to the regenerating means container.

Document DE4446731 relates to a dishwasher having a throughflow meter which is positioned on a valve-controlled path to the softener and reports to the program control. The meter measures the recycled water volume flowing into the system for brine preparation. The magnetic valve is influenced via a comparator when the selected recycled water volume coincides with the registered water volume.

Document DE10204003 relates to a impeller type flowmeter for household appliance, said flowmeter comprising an impeller within a housing and an optical radiation transmitter (9) and receiver.

Document US2005236019 relates to a dish washer including a sump for storing wash water, a supply passage having a section for dropping the wash water supplied to the sump, a flow meter for detecting a flow rate of the wash water dropped from the supply passage, a discharge pump for discharging the wash water out of the sump, and a micom for selectively operating the discharge pump according to the flow rate detected from the flow meter.

The object of the present invention is to solve the aforementioned problems, and in particular to provide a system for reducing the hardness of water adapted to be used in a household washing machine, in particular a dishwasher, wherein the detection of the exhaustion of the means for the reduction of the hardness of water can be provided in a simple, easy, safe and economic way.

It is another object of the present invention to provide a safe and advantageous method for detecting the quantity of means for the reduction of the hardness of water being present in the respective container.

Another object of the present invention is to provide an advantageous method of operation of a system for reducing the hardness of water , which also allows to optimize the consumption of means for the reduction of the hardness of water, in particular by adapting said consumption to the hardness of the water from the mains.

In order to achieve said objects, the present invention discloses a system for reducing the hardness of water and a method for detecting the exhaustion of means for the reduction of the hardness of water having the features set out in the appended claims, which are intended as an integral part of the present invention.

Further objects, features and advantages of the present invention will become apparent from the following detailed description and from the annexed drawing, which is supplied by way of non-limiting example only and which schematically illustrates a system for reducing the hardness of water adapted to be used in a household washing machine, in particular a dishwasher, according to the present invention.

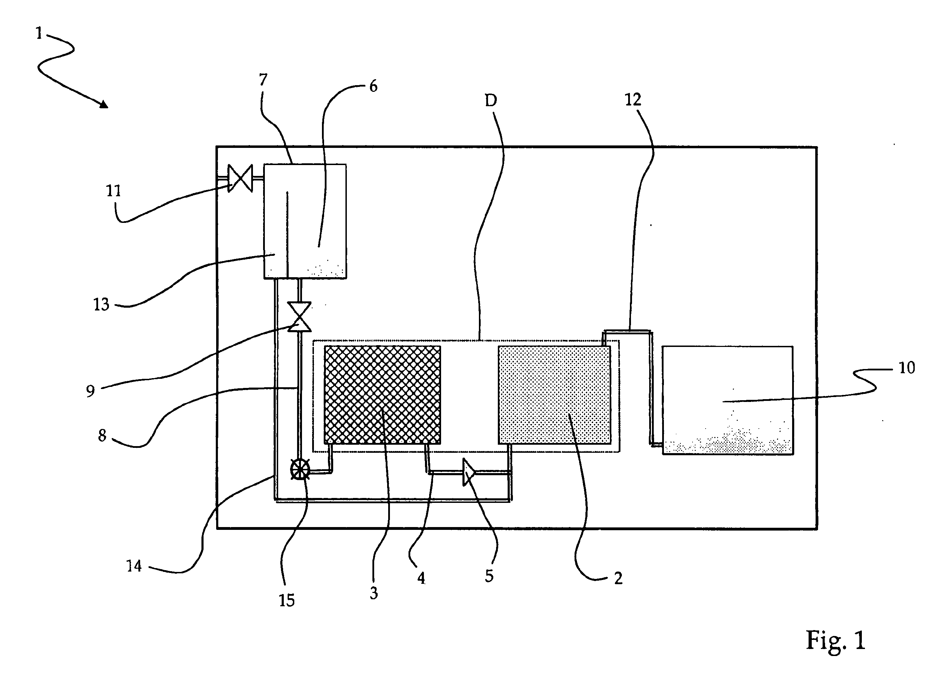

In Fig. 1, reference number 1 designates as a whole a preferred embodiment of a system for controlling the hardness of water adapted to be usef in a household washing machine, in particular a dishwasher, according to the present invention.

Reference number 2 designates a resin container containing ionic exchange resins, while reference number 3 designates a tank containing an agent for regenerating ionic exchange resins, in particular brine; resin container 2 and tank 3 are hydraulically connected to each other and are included in a softening device D used for reducing the hardness of water.

As shown in Fig. 1, softening device D is so provided that resin container 2 and tank 3 are hydraulically connected to each other by means of a duct 4 comprising a non-retum valve 5.

In Fig. 1, resin container 2 and tank 3 are shown as separate components, but they may also be integrated into a single container.

System 1 for reducing the hardness of water according to the present invention also comprises first means 6, 7, 8, 9, 15 for supplying regeneration water through tank 3, in order to regenerate the ionic exchange resins contained in resin container 2 when the resins have become exhausted.

Said first means 6, 7, 8, 9, 15 comprise a first chamber 6 for regeneration water, which is included in a multifunction device 7; said first basin 6 is hydraulically connected to softening device D through a regeneration duct 8 and a regeneration valve 9.

Multifunction device 7 carries out several functions, i.e.: non-return device, using an air break for preventing the water from returning to the mains in case of vacuum in the latter; collection of water for regenerating the water softening resins; vent to the external environment and outlet column for vapours coming from a wash tub 10 of the washing machine.

Multifunction device 7 is hydraulically connected to the mains through an inlet valve 11, whereas resin container 2 is hydraulically connected to wash tub 10 through an inlet duct 12.

Consequently, the wash and rinse water reaches wash tub 10 after having flowed through resin container 2, which provides for softening it and obtaining an optimal value of hardness of water.

System 1 according to the present invention also comprises second means 13, 14 for supplying water through said resin container 2, in order to soften the water from the mains.

Said second means comprise a second basin 13 included in said multifunction device 7 and a softening duct 14 adapted to hydraulically connect said second basin 13 to resin container 2.

According to the present invention, said first means 6, 7, 8, 9, 15 for supplying regeneration water through tank 3 comprise a volumetric meter 15, which allows to regenerate the ionic exchange resins by controlling the quantity of regeneration water flowing through salt tank 3 and resin container 2.

Preferably, said volumetric meter 15 is of the turbine type and comprises an impeller fitted with a magnet enclosed in a housing and an element sensitive to the magnetic field generated by the magnet. Said sensing element may be a reed contact, comprising contacts sealed in a glass evelope filled with inert gas, or a Hall-effect sensor.

Preferably, the impeller of volumetric meter 15 is placed inside regeneration duct 8, in particular upstream of the inlet of tank 3, whereas the sensing element is placed outside regeneration duct 8; besides, volumetric meter 15 may be integrated either with the body of softening device D or with the multifunction device 7.

The magnet of volumetric meter 15 generates a number of signals corresponding to the number of impeller revolutions; said signals are detected by the sensing element and are then sent to a control device (not shown in Fig. 1), in particular of the electronic type, of system 1 according to the present invention.

Said control device is adapted to handle the signals generated by volumetric meter 15, in particular for the purpose of determining the quantity of regeneration water flowing through softening device D.

When the washing machine is installed, the hardness values of the water from the mains are set in said control device.

Depending on the degree of hardness of the water from the mains used by the washing machine, within a certain number of wash cycles the electronic programmer of the washing machine activates a certain number of resin regeneration cycles; in particular, the activation of resin regeneration by the electronic programmer occurs more often when the degree of hardness of water is high, and less often when the degree of hardness is low, so as to obtain a minimum value of hardness of wash/rinse water of approximately 7° F, which is considered to be optimal for washing crockery without damaging glasses and without the risk of an excessive formation of bubbles, i.e. too much foam, due to too much detergent, resulting in the above-described problems.

Since the regeneration frequency and the quantity of regeneration water required for the regeneration of the ionic exchange resins depend on the degree of hardness of the water from the mains, the control device controls both the correct regeneration frequency and the quantity of regeneration water required for the regeneration of the resins. In fact, depending on the hardness of the water from the mains, the control device controls the opening of regeneration valve 9 and closes it as soon as volumetric meter 15 measures the flow of the preset quantity of regeneration water.

Consequently, by using volumetric meter 15 in system 1 for reducing the hardness of water according to the present invention, it is possible to measure the quantity of regeneration water supplied to softening device D in an accurate and continuous way. This allows to make a very large number of adjustments to system 1 in order to reduce the hardness of water, thus adapting it to the hardness of water from the mains and drastically reducing the consumption of regeneration agents.

The use of volumetric meter 15 also allows to obtain a more economical and reliable solution compared to the systems fitted with a mixing valve for mixing in the wash tub the water from the decalcifier with water supplied directly from the mains and consequently having a higher degree of hardness.

Furthermore, putting volumetric meter 15 in system 1 for reducing the hardness of water according to the present invention allows the control device of the washing machine to process the signals generated by volumetric meter 15 in order to obtain information on the exhaustion of the regeneration agents, in particular salt, in tank 3.

In fact, to a certain quantity of regeneration water flowing through tank 3 corresponds a certain consumption of the regeneration agent; as a result, after receiving from volumetric meter 15 on the quantity of water which has flowed through tank 3, the control device of the washing machine can also calculate the exhaustion degree of the regeneration agent in tank 3.

This allows to avoid using a float inside tank 3 and to obtain considerable advantages in terms of a higher reliability of system 1 for reducing the hardness of water and in terms of cost reduction.

As a matter of fact, the typical prior-art float-type system proves to be sufficiently reliable in causing the warning lamp to go off when the salt tank is refilled by the user; on the other hand, however, said float-type system often proves to be very inaccurate in signaling the lack of salt.

Therefore, in this respect, the control device of the washing machine may also be used for warning the user that salt must be added in tank 3, e.g. by turning on a warning lamp. Thus, the necessity of adding salt is signaled to the user in a safe, simple and reliable way.

The advantages of the present invention are apparent from the above description.

It is plain that the present invention is non limited to the system for reducing the hardness of water in a washing machine, in particular a dishwasher, and to the method thereof described above, but may be subject to many modifications, improvements or replacements of equivalent parts and elements without departing from the inventive idea, as clearly specified in the appended claims.

Among the many possible variants, volumetric meter 15 may be so positioned that the magnetic field generated by the magnet can be detected by a sensing element, e.g. a reed contact, already present on another component of the washing machine; this would allow to reduce the costs of system 1 according to the present invention even further.

For example, said variant consists in providing a system 1 for reducing the hardness of water according to the present invention which comprises a sensor for detecting the state of the resins, e.g. like the one described in patent application TO2000A000012 in the name of the same Applicant of the present patent application. In said variant, the signals corresponding to the number of impeller revolutions can be detected by the sensing element of sensor detecting the state of resin.

According to a further variant, the magnetic sensor of volumetric meter 15 might be replaced with an optical sensor, such as a phototransistor, adapted to detect the rotation of the impeller of said volumetric meter 15.

According to another possible variant, regeneration duct 8, regeneration valve 9 and softening duct 14 might be connected directly to inlet valve 11, so that the water from the mains is supplied directly to system 1 according to the present invention, i.e. without using multifunction device 7.

## Claims

1. System (1) for reducing the hardness of water in a household washing machine, in particular a dishwasher, comprising:
- a softening device (D) for softening the water, comprising an ionic exchange resin container (2), containing resins whose softening capacity decreases as a function of the quantity of treated water, and a tank (3) containing an agent, in particular brine, for regenerating said ionic exchange resins;
- first means (6, 7, 8, 9, 15) for supplying regeneration water through the tank (3), in order to regenerate the ionic exchange resins contained in the container (2);
- second means (13, 14) for supplying water through said resin container (2) in order to soften said water to be supplied to a wash tub (10),
said first means (6, 7, 8, 9, 15) for supplying water comprising a volumetric meter (15) which allows to perform a regeneration of the ionic exchange resins by controlling the quantity of regeneration water flowing through said softening device (D), said volumetric meter (15) being of the turbine type and comprising an impeller,
**characterized in that**
said volumetric meter (15) is positioned in such a way to be detected by a magnetical or optical sensor already present in a component of the washing machine, said sensor having a sensing element adapted to detect the number of revolutions of said impeller of the volumetric meter (15).

2. System according to claim 1, **characterized in that** said sensor having a sensing element adapted to detect the number of revolutions of said impeller is a sensor of the state of the resin.

3. System according to claim 2, **characterized in that** said impeller of the volumetric meter (15) is provided with a magnet enclosed in a housing and said sensor of the state of the resin comprises an element sensitive to the magnetic field generated by the magnet.

4. System according to the preceding claim 1, **characterized in that** said sensing element is a reed contact, comprising contacts sealed in a glass envelope filled with inert gas.

5. System according to claim 1, **characterized in that** said sensing element is a Hall-effect sensor.

6. System according to claim 1, **characterized in that** the impeller of the volumetric meter (15) is placed inside a regeneration duct (8), in particular upstream of the inlet of the tank (3), and that the sensing element is placed outside the regeneration duct (8).

7. System according to claim 1, **characterized in that** said first means (6, 7, 8, 9, 15) for supplying water comprise a multifunction device (7) hydraulically connected to the mains through an inlet valve (11) and comprising a first basin (6) for regeneration water.

8. System according to the preceding claim, **characterized in that** said volumetric meter (15) is integrated with said multifunction device (7).

9. System according to claim 1, **characterized in that** said second means (13, 14) comprise a softening duct (14).

10. System according to claims 7 and 9, **characterized in that** said second means (13, 14) comprise a second basin (13) included in said multifunction device (7), said second basin (13) being connected to said container (2) through said softening duct (14).

11. System according to at least one of the preceding claims, **characterized in that** said system comprises a control device of the electronic type, adapted to handle signals generated by said volumetric meter (15), in particular in order to provide an accurate and continuous measurement of the quantity of regeneration water supplied to the softening device (D) and to obtain information about the exhaustion of the regeneration agents, in particular salt, in the tank (3).

12. Method for reducing the hardness of water in a household washing machine, in particular a dishwasher, comprising:
- a softening device (D) for softening the water, comprising resins whose softening capacity decreases as a function of the quantity of treated water, said softening device (D) comprising a container (2) of said resins and a tank (3) containing a regenerating agent, in particular brine, for regenerating said ionic exchange resins;
- a control device, in particular of the electronic type;
said method comprising at least one step for setting in said control device the degree of hardness of the water of the mains used by the washing machine,
said control device handling the signals generated by a volumetric meter (15), so as to perform a regeneration of the resins through an accurate measurement of the quantity of regeneration water flowing through the tank (3) and the container (2),
**characterized in that**
said signals are detected by a sensing element of a magnetical or optical sensor already present on another component of the washing machine.

13. Method according to the preceding claim, **characterized in that** said signals are detected by a sensor for the detection of the state of the resins.

14. Method according to the preceding claims 12 and 13, **characterized in that** said signals generated by the volumetric meter (15) send information to the control device on the correct resin regeneration frequency and on the quantity of regeneration water required for regenerating the resins.

15. Method according to claim 12, **characterized in that** said signals generated by the volumetric meter (15) are used by the control device in order to obtain information on the exhaustion of the regenerating agents in the tank (3).

16. Method according to any of the preceding claims from 12 to 15, **characterized in that** said control device controls the opening of a regeneration valve (9) located upstream of said softening device (D) and closes it as soon as the volumetric meter (15) measures the flow of the preset quantity of regeneration water required for a certain hardness of water from the mains.

17. Method according to any of the preceding claims from 12 to 16, **characterized in that** said signals correspond to the number of revolutions of an impeller of the volumetric meter (15).

18. Method according to the preceding claim, **characterized in that** said signals are detected by a magnetic sensor, in particular a reed contact or a Hall-effect sensor.

19. Method according to claim 17, **characterized in that** said signals are detected by an optical sensor, in particular a phototransistor.

20. Household washing machine, in particular a dishwasher, utilizing the method and/or the system for controlling the hardness of water according to any of the preceding claims.

## Patentansprüche

1. System (1) zum Reduzieren der Wasserhärte in einer Haushalts-Waschmaschine, insbesondere einem Geschirrspüler, aufweisend:
eine Enthärtungseinrichtung (D) zum Enthärten des Wassers, aufweisend einen ionischen Austauschharz-Behälter (2), welcher Harze enthält, deren Enthärtungskapazität als eine Funktion von der Menge des behandelten Wassers abnimmt, und einen Tank (3), welcher ein Agens, insbesondere Lauge, zum Regenerieren des ionischen Austauscherharzes enthält;
erste Mittel (6, 7, 8, 9, 15) zum Zuführen von Regenerationswasser durch den Tank (3), um das ionische Austauscherharz, welches in dem Behälter (2) enthalten ist, zu regenerieren;
zweite Mittel (13,14) zum Zuführen von Wasser durch den Harz-Behälter (2), um das Wasser, welches einem Spülbehälter (10) zuzuführen ist, zu enthärten,
wobei die ersten Mittel (6, 7, 8, 9, 15) zum Zuführen von Wasser einen volumetrischen Zähler (15) aufweisen, welcher es erlaubt, eine Regeneration des ionischen Austauscherharzes durch steuern der Menge des Regenerationswassers auszuführen, welches durch die Enthärtungseinrichtung (D) fließt, wobei der volumetrische Zähler (15) vom Turbinen-Typ ist und ein Laufrad aufweist,
**dadurch gekennzeichnet, dass**
der volumetrische Zähler (15) in solch einer Weise positioniert ist, um von einem magnetischen oder optischen Sensor detektiert zu werden, welcher bereits in einer Komponente der Waschmaschine vorhanden ist, wobei der Sensor ein Erfassungselement hat, welches angepasst ist, die Umdrehungszahl des Laufrads des volumetrischen Zählers (15) zu detektieren.

2. System nach Anspruch 1, **dadurch gekennzeichnet, dass** der Sensor, welcher ein Erfassungselement hat, welches dazu angepasst ist, die Umdrehungszahl des Laufrads zu detektieren, ein Harzzustands-Sensor ist.

3. System nach Anspruch 2, **dadurch gekennzeichnet, dass** das Laufrad des volumetrischen Zählers (15) mit einem Magneten ausgestattet ist, welcher von einem Gehäuse umschlossen ist, und der Harzzustands-Sensor ein Element aufweist, welches sensitiv zu dem durch den Magneten generierten magnetischen Feld ist.

4. System nach dem vorstehenden Anspruch 1, **dadurch gekennzeichnet, dass** das Erfassungselement ein Reed-Kontakt ist, aufweisend Kontakte, welche in einer mit Inertgas gefüllten Glashülle versiegelt sind.

5. System nach Anspruch 1, **dadurch gekennzeichnet, dass** das Erfassungselement ein Hall-Effekt-Sensor ist.

6. System nach Anspruch 1, **dadurch gekennzeichnet, dass** das Laufrad des volumetrischen Zählers (15) in einem Regenerationskanal (8) platziert ist, insbesondere stromaufwärts von dem Einlass des Tanks (3), und, dass das Erfassungselement außerhalb des Regenerationskanals (8) platziert ist.

7. System nach Anspruch 1, **dadurch gekennzeichnet, dass** die ersten Mittel (6, 7, 8, 9, 15) zum Zuführen von Wasser eine Multifunktionseinrichtung (7) aufweisen, welche hydraulisch mit dem Wasser-Netz durch ein Einlassventil (11) verbunden ist und ein erstes Becken (6) für Regenerationswasser aufweist.

8. System nach einem der vorstehenden Ansprüche, **dadurch gekennzeichnet, dass** der volumetrische Zähler (15) mit der Multifunktionseinrichtung (7) integriert ist.

9. System nach Anspruch 1, **dadurch gekennzeichnet, dass** die zweiten Mittel (13, 14) einen Enthärtungskanal (14) aufweisen.

10. System nach den Ansprüchen 7 und 9, **dadurch gekennzeichnet, dass** die zweiten Mittel (13, 14) ein zweites Becken (13) aufweisen, welches in der Multifunktionseinrichtung (7) umfasst ist, wobei das zweite Becken (13) durch den Enthärtungskanal (14) mit dem Behälter (2) verbunden ist.

11. System nach wenigstens einem der vorstehenden Ansprüche, **dadurch gekennzeichnet, dass** das System eine Steuereinrichtung des elektronischen Typs aufweist, welche dazu angepasst ist, Signale zu verarbeiten, welche von dem volumetrischen Zähler (15) generiert wurden, insbesondere, um eine genaue und kontinuierliche Messung der Menge an Regenerationswasser bereitzustellen, welches der Enthärtungseinrichtung (D) zugeführt wurde und, um Informationen über die Erschöpfung des Regenerations-Agens, insbesondere Salz, in dem Tank (3) zu erhalten.

12. Verfahren zum Reduzieren der Wasserhärte in einer Haushalts-Waschmaschine, insbesondere einem Geschirrspüler, aufweisend:
eine Enthärtungseinrichtung (D) zum Enthärten des Wassers, aufweisend Harze, deren Enthärtungskapazität als eine Funktion von der Menge des behandelten Wassers abnimmt, wobei die Enthärtungseinrichtung (D) einen Behälter (2) der Harze und einen Tank (3) aufweist, welcher ein Regenerations-Agens, insbesondere Lauge, enthält zum Regenerieren des ionischen Austauscherharzes;
eine Steuereinrichtung, insbesondere des elektronischen Typs;
wobei das Verfahren wenigstens einen Schritt zum Einstellen des Wasserhärte-Grades von dem Wasser-Netz, welches von der Waschmaschine genutzt wird, in die Steuereinrichtung aufweist,
wobei die Steuereinrichtung die Signale, welche von einem volumetrischen Zähler (15) generiert wurden, verarbeitet, um eine Regeneration des Harzes durch eine genaue Messung der Menge an Regenerationswasser, welches durch den Tank (3) und den Behälter (2) fließt, auszuführen,
**dadurch gekennzeichnet, dass**
die Signale von einem Erfassungselement eines magnetischen oder optischen Sensors, welcher bereits auf einer anderen Komponente der Waschmaschine vorhanden ist, detektiert werden.

13. Verfahren nach dem vorstehenden Anspruch, **dadurch gekennzeichnet, dass** die Signale von einem Sensor für die Detektion des Zustand des Harzes detektiert werden.

14. Verfahren nach den vorstehenden Ansprüchen 12 und 13, **dadurch gekennzeichnet, dass** die Signale, welche von dem volumetrischen Zähler (15) generiert werden, Informationen zu der Steuereinrichtung über die korrekte Harzregenerationsfrequenz und die benötigte Menge an Regenerationswasser zum Regenerieren des Harzes senden.

15. Verfahren nach Anspruch 12, **dadurch gekennzeichnet, dass** die Signale, welche von dem volumetrischen Zähler (15) generiert werden, von der Steuereinrichtung genutzt werden, um Informationen über die Erschöpfung des Regenerations-Agens in dem Tank (3) zu erhalten.

16. Verfahren nach einem der vorstehenden Ansprüche von 12 bis 15, **dadurch gekennzeichnet, dass** die Steuereinrichtung das Öffnen eines Regenerationsventils (9) steuert, welches stromaufwärts von der Enthärtungseinrichtung (D) angeordnet ist, und dieses schließt, sobald der volumetrische Zähler (15) den Fluss der voreingestellten Menge des benötigten Regenerationswassers für eine bestimmte Wasserhärte des Wasser-Netzes misst.

17. Verfahren nach einem der vorstehenden Ansprüche von 12 bis 16, **dadurch gekennzeichnet, dass** die Signale zu der Umdrehungszahl eines Laufrads des volumetrischen Zählers (15) korrespondieren.

18. Verfahren nach einem der vorstehenden Ansprüche, **dadurch gekennzeichnet, dass** die Signale von einem magnetischen Sensor, insbesondere einem Reed-Kontakt oder einem Hall-Effekt-Sensor, detektiert werden.

19. Verfahren nach Anspruch 17, **dadurch gekennzeichnet, dass** die Signale von einem optischen Sensor, insbesondere einem Fototransistor, detektiert werden.

20. Haushalts-Waschmaschine, insbesondere ein Geschirrspüler, welcher das Verfahren und/oder das System zum Steuern der Wasserhärte nach einem der vorstehenden Ansprüche nutzt.

## Revendications

1. Système (1) permettant de réduire la dureté de l'eau dans une machine à laver à usage domestique, en particulier dans un lave-vaisselle, comprenant :
- un dispositif d'adoucissement (D) pour adoucir l'eau, comportant un conteneur de résines échangeuses d'ions (2), contenant des résines dont la capacité d'adoucissement diminue en fonction de la quantité d'eau traitée, et un réservoir (3) contenant un agent, en particulier, de la saumure, pour régénérer lesdites résines échangeuses d'ions ;
- des premiers moyens (6, 7, 8, 9, 15) permettant de fournir l'eau de régénération à travers le réservoir (3), afin de régénérer les résines échangeuses d'ions contenues dans le conteneur (2) ;
- des seconds moyens (13, 14) pour fournir de l'eau à travers ledit conteneur de résines (2) afin d'adoucir ladite eau qui doit être fournie à une cuve de lavage (10),
lesdits premiers moyens (6, 7, 8, 9, 15) permettant de fournir de l'eau comportant un compteur volumétrique (15) qui permet de réaliser une régénération des résines échangeuses d'ions en commandant la quantité d'eau de régénération circulant à travers ledit dispositif d'adoucissement (D), ledit compteur volumétrique (15) étant du type turbine et comprenant une hélice,
**caractérisé en ce que**
ledit compteur volumétrique (15) est positionné d'une manière telle qu'il soit détecté par un capteur magnétique ou optique déjà présent dans un composant de la machine à laver, ledit capteur comportant un élément de détection adapté pour détecter le nombre de tours de ladite hélice du compteur volumétrique (15).

2. Système selon la revendication 1, **caractérisé en ce que** ledit capteur comportant un élément de détection adapté pour détecter le nombre de tours de ladite hélice est un capteur de l'état de la résine.

3. Système selon la revendication 2, **caractérisé en ce que** ladite hélice du capteur volumétrique (15) est pourvue d'un aimant enfermé dans un logement et ledit capteur de l'état de la résine comprend un élément sensible au champ magnétique généré par l'aimant.

4. Système selon la revendication précédente 1, **caractérisé en ce que** ledit élément de détection est un relais à contacts scellés, comprenant des contacts enfermés hermétiquement dans une enveloppe de verre remplie de gaz inerte.

5. Système selon la revendication 1, **caractérisé en ce que** ledit élément de détection est un capteur à effet Hall.

6. Système selon la revendication 1, **caractérisé en ce que** l'hélice du compteur volumétrique (15) est placée à l'intérieur d'un conduit de régénération (8), en particulier en amont de l'orifice d'entrée du réservoir (3), et **en ce que** l'élément de détection est placé à l'extérieur du conduit de régénération (8).

7. Système selon la revendication 1, **caractérisé en ce que** lesdits premiers moyens (6, 7, 8, 9, 15) servant à fournir de l'eau comportent un dispositif multifonctionnel (7) raccordé hydrauliquement à la canalisation par l'intermédiaire d'une vanne d'entrée (11) et comportant un premier bassin (6) destiné à l'eau de régénération.

8. Système selon la revendication précédente, **caractérisé en ce que** ledit compteur volumétrique (15) est intégré au dit dispositif multifonctionnel (7).

9. Système selon la revendication 1, **caractérisé en ce que** lesdits seconds moyens (13, 14) comportent un conduit d'adoucissement (14).

10. Système selon les revendications 7 et 9, **caractérisé en ce que** lesdits seconds moyens (13, 14) comportent un second bassin (13) intégré dans ledit dispositif multifonctionnel (7), ledit second bassin (13) étant raccordé au dit conteneur (2) par l'intermédiaire dudit conduit d'adoucissement (14).

11. Système selon au moins l'une des revendications précédentes, **caractérisé en ce que** ledit système comprend un dispositif de commande du type électronique, adapté pour traiter des signaux générés par ledit compteur volumétrique (15), en particulier afin de fournir une mesure précise et continue de la quantité d'eau de régénération fournie au dispositif d'adoucissement (D) et pour obtenir une information concernant l'épuisement des agents de régénération, en particulier, du sel, dans le réservoir (3).

12. Procédé permettant de réduire la dureté de l'eau dans une machine à laver à usage domestique, en particulier dans un lave-vaisselle, comprenant :
- un dispositif d'adoucissement (D) permettant d'adoucir l'eau, comportant des résines dont la capacité d'adoucissement décroît en fonction de la quantité d'eau traitée, ledit dispositif d'adoucissement (D) comprenant un conteneur (2) desdites résines et un réservoir (3) contenant un agent de régénération, en particulier, de la saumure, pour régénérer lesdites résines échangeuses d'ions ;
- un dispositif de commande, en particulier du type électronique ;
ledit procédé comportant au moins une étape permettant d'établir dans ledit dispositif de commande le degré de dureté de l'eau des canalisations de distribution utilisées par la machine à laver,
ledit dispositif de commande traitant les signaux générés par un compteur volumétrique (15) de façon à exécuter une régénération des résines par l'intermédiaire d'une mesure précise de la quantité de l'eau de régénération circulant à travers le réservoir (3) et le conteneur (2),
**caractérisé en ce que**
lesdits signaux sont détectés par un élément de détection d'un capteur magnétique ou optique déjà présent sur un autre composant de la machine à laver.

13. Procédé selon la revendication précédente, **caractérisé en ce que** lesdits signaux sont détectés par un capteur permettant la détection de l'état des résines.

14. Procédé selon les revendications précédentes 12 et 13, **caractérisé en ce que** lesdits signaux générés par le compteur volumétrique (15) transmettent une information au dispositif de commande concernant la fréquence correcte de régénération des résines et la quantité d'eau de régénération requise pour régénérer les résines.

15. Procédé selon la revendication 12, **caractérisé en ce que** lesdits signaux générés par le compteur volumétrique (15) sont utilisés par le dispositif de commande afin d'obtenir une information concernant l'épuisement des agents de régénération dans le réservoir (3).

16. Procédé selon l'une quelconque des revendications précédentes 12 à 15, **caractérisé en ce que** ledit dispositif de commande contrôle l'ouverture d'une vanne de régénération (9) placée en amont dudit dispositif d'adoucissement (D) et la ferme dès que le compteur volumétrique (15) mesure l'écoulement de la quantité prédéfinie d'eau de régénération requise pour une certaine dureté d'eau provenant de la canalisation de distribution.

17. Procédé selon l'une quelconque des revendications précédentes 12 à 16, **caractérisé en ce que** lesdits signaux correspondent au nombre de tours d'une hélice du compteur volumétrique (15).

18. Procédé selon la revendication précédente, **caractérisé en ce que** lesdits signaux sont détectés par un capteur magnétique, en particulier un capteur avec relais à contacts scellés ou un capteur à effet Hall.

19. Procédé selon la revendication 17, **caractérisé en ce que** lesdits signaux sont détectés par un capteur optique, en particulier un phototransistor.

20. Machine à laver à usage domestique, en particulier lave-vaisselle, utilisant le procédé et/ou le système permettant de contrôler la dureté de l'eau selon l'une quelconque des revendications précédentes.
